# EUROPÄISCHE PATENTSCHRIFT

(11) **EP 1 851 487 B1**
(45) Veröffentlichungstag und Bekanntmachung des Hinweises auf die Patenterteilung: **13.01.2010**
(21) Anmeldenummer: 06723069.8
(22) Anmeldetag: 21.02.2006
(51) Int. Cl.: F24F 13/02, F16L 23/14, B21D 5/08

(54) **SYSTEM ZUM VERBINDEN VON KLIMATISIERUNGSKANÄLEN**
SYSTEM FOR CONNECTING AIR CONDITIONING DUCTS
SYSTEME POUR RELIER DES VOIES DE CLIMATISATION

(30) Priorität: 23.02.2005 DE 102005008604
(43) Veröffentlichungstag der Anmeldung: 07.11.2007
(73) Patentinhaber: Smitka, Günter, 58644 Iserlohn (DE)
(72) Erfinder: Smitka, Günter, 58644 Iserlohn (DE)
(74) Vertreter: Wenzel & Kalkoff
(86) Internationale Anmeldenummer: PCT/EP2006/001558
(87) Internationale Veröffentlichungsnummer: WO 2006/089714

(56) Entgegenhaltungen:
- EP-A- 0 014 123
- EP-A- 0 298 912
- DE-A1- 2 138 966
- US-A- 4 542 923
- US-A- 4 566 724
- PATENT ABSTRACTS OF JAPAN Bd. 1995, Nr. 02, 31. März 1995 (1995-03-31) & JP 06 331079 A (MIE DAKUTO KOGYO KK), 29. November 1994 (1994-11-29)

## Beschreibung

Die Erfindung betrifft ein System für Klimatisierungskanäle aus aneinandergesetzten, im Querschnitt rechteckigen Kanalteilstücken aus Blech, an deren beiden Enden zum Verbinden der Kanalteilstücke jeweils ein rahmenartiger Flansch aus Profilen mit in Öffnungen der Profile einsteckbaren Eckwinkeln angeordne ist,
wobei das den Eckwinkel umschließende Profil eine innere Abkantung neben und parallel zu einem ersten Schenkel aufweist. Die profile können in Anlagen zum Herstellen der Kanalteilstücke an beiden Rändern einer Blechbahn vor dem Abkanten und Falten der Kanalteilstücke angeformt oder als Flanschrahmen aus Einzelprofilen und Eckwinkeln zum Aufschieben auf die Enden der Kanalteilstücke ausgebildet sein.

Aus DE 2138 966 A1 ist ein System der vorstehenden Art bekannt, bei dem ein Flanschrahmen aus Einzelprofilen und Eckwinkeln zum Aufschieben auf die Enden von Kanalteilstücken gebildet wird. Der in Richtung auf die Kanalwand abgebogene zweite Schenkel weist zunächst einen parallel zum ersten Schenkel verlaufenden Abschnitt auf, an den sich ein schräg nach außen abgewinkelter Abschnitt anschließt. Von diesem ist parallel zur Kanalwand ein innerer Steg zurückgebogen, von dem eine innere Abkantung nach unten zum Aufsetzen auf einem unteren zur Kanalwand parallelen Schenkel des Profils abgewinkelt ist. Der zurückgebogene innere Steg und der untere zu diesem und zur Kanalwand parallele Schenkel des Profils dienen zur Aufnahme der Kanalwand beim Aufschieben des Flanschrahmens auf das entsprechende Ende des Kanalteilstücks. Die innere Abkantung, die eine Position parallel sowie im Abstand von dem abgewinkelten ersten Schenkel des Profils einnimmt, dient dabei als Anschlag für die vordere Kanalwandkante.

Zum Herstellen geschlossener Profile, die den Eckwinkel umschließen, wird vor dem Abkanten der Kanalwände von einer Blechbahn das Profil durch mehrfaches Abwinkeln von Schenkeln und Stegen hergestellt und ein äußerer abgewinkelter Schenkel des Profils auf der Kanalwand durch Punkten, Verdrücken oder Falzen oder dergleichen befestigt. Dabei können Löcher in der Kanalwand bzw. in der Verzinkung derselben entstehen, und die Befestigung beeinträchtigt die Optik des Kanals in diesem Bereich.

Zur Vermeidung des Aufwands für die Befestigung und zur Schaffung glatter Flächen im Flanschbereich besteht erfindungsgemäß
das Profil aus dem aus der Kanalblechebene abgewinkelten ersten Schenkel, einem davon abgewinkelten äußeren Steg, einem hiervon in Richtung auf die Kanalwand abgebogenen zweiten Schenkel und einem hiervon zurückgebogenen inneren Steg, von dem die innere Abkantung nach innen abgewinkelt ist.

Nach dieser gleichermaßen für die Integration der Herstellung der Flansche in die Kanalteilstückfertigung als auch für gesonderte Flansche aus Einzelprofilen und Eckwinkeln zum Aufschieben auf die Enden von Kanalteflstücken geeigneten Erfindung ist eine innere Abkantung, nach innen abgebogen von einem nach innen abgewinkelten Steg parallel zur Kanalblechebene, neben dem ersten zur Kanalblechebene senkrechten Schenkel vorgesehen. Nach dem Einstecken der Eckwinkel in die Öffnungen der Profile - geteilte Eckwinkel bei an das Kanalblech unmittelbar angeformten Profilen wird beim Verschrauben der Flansche zum Verbinden von benachbarten Kanalteilstücken das Paket aus den beiden ersten Schenkeln und den beiden inneren Abkantungen der beiden miteinander verbundenen Profile zwischen den beiden Eckwinkel zusammengepreßt, so daß auch die inneren Abkantungen der beiden Profile befestigt sind und der Flansch insgesamt eine hohe Stabilität ausweist und formschön ist.

Anspruch 2 betrifft die Anformung des erfindungsgemäßen Profils nach Anspruch 1 an beiden Rändern einer Blechbahn vor dem Abkanten der Kanalwände beim Herstellen von Kanalteilstüeken. Anspruch 3 verdeutlicht die Bedeutung der Erfindung für die Herstellung herkömmlicher Flansche zum Aufschieben auf die Enden von Kanalteilstücken. Anspruch 4 zeigt, daß sich die Erfindung mit einer besonders vorteilhaften einfachen Verbindung der Flansche an den Enden der Kanalteilstücke kombinieren läßt.

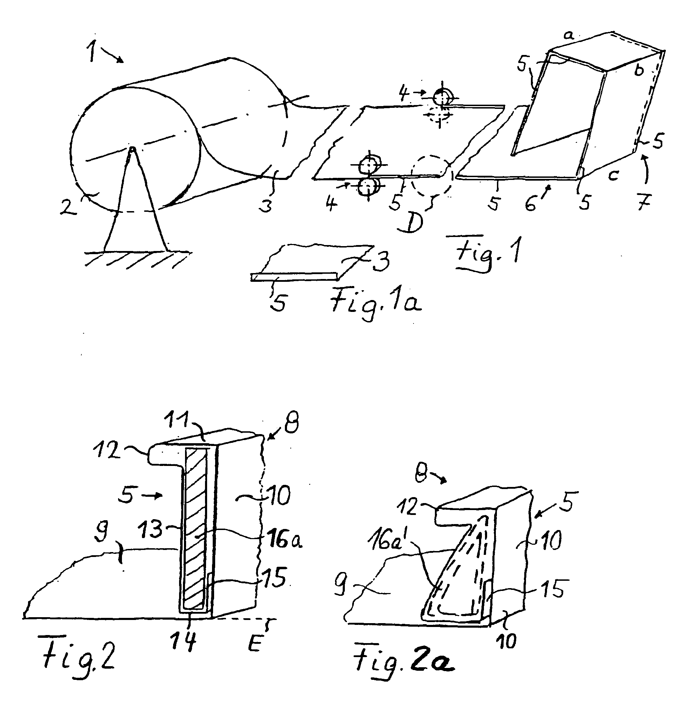

In Fig. 1 wird von einem in einer Haspelvorrichtung 1 gelagerten Blechcoil 2 eine Blechbahn 3 abgezogen und einer Anlage 6 zum Herstellen von Kanalteilstücken 7 zugeführt. Die Blechbahn 3 durchläuft auf diesem Weg zwei vorzugsweise einander gegenüberliegend an den Rändern der Blechbahn 3 angeordnete bekannte und in der Zeichnung rein schematisch dargestellte Vorrichtungen 4 zum Anformen von geschlossenen Profilen 5, wie schematisch auch in Fig. 1a dargestellt, mit Unterbrechungen für die Eckbereiche der herzustellenden Kanalteilstücke 7. Nach dem Kanten und Falzen der Kanalteilstücke 7 in der Station 6 mit Ausbildung von Kanten a, b und c an dem Kanalteilstück 7 verläuft auf beiden Seiten im Randbereich der Öffnung des Kanalteilstücke 7 ein Flansch 8 aus Profilen 5.

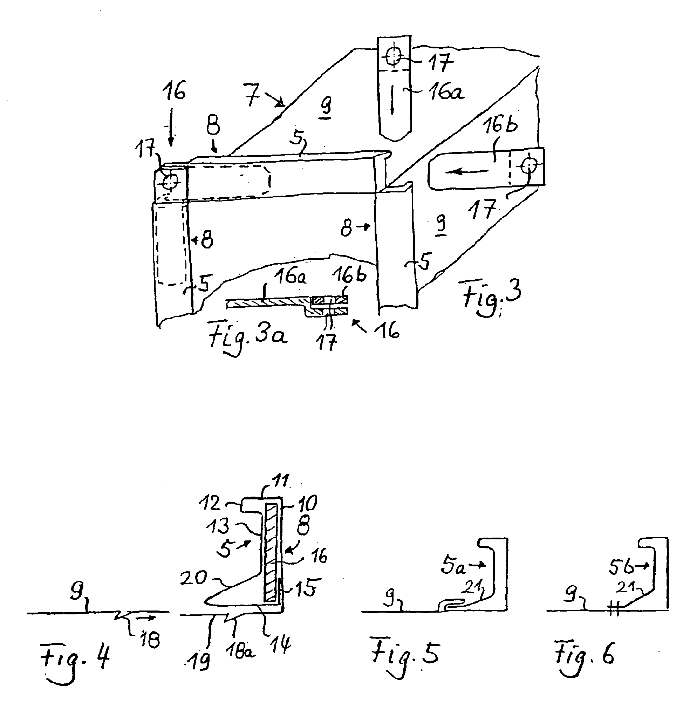

Fig. 2 zeigt schematisch einen solchen Flansch 8, der als geschlossenes Profil 5 auf einer Anlage wie etwa der in Fig. 1 dargestellten Art an eine der Kanalwände 9 angeformt ist. Das Profil 5 besteht aus einem aus der Kanalblechebene E abgewinkelten ersten Schenkel 10, einem davon abgewinkelten äußeren Steg 11, einer sich etwa parallel zur Kanalblechebene E seitwärts erstreckenden Nase 12 für eine nicht dargestellte, aber bekannte Schiebeleiste zum Verbinden benachbarter Flansche 8, einem hiervon in Richtung auf die Kanalwand 9 abgebogenen zweiten Schenkel 13 und einem hiervon zurückgebogene inneren Steg 14, von dem eine innere Abkantung 15 parallel neben dem ersten Schenkel 10 abgewinkelt ist. In das Profil 5 ist ein Schenkel 16a eines zweiteiligen Eckwinkel 16 eingeschoben, wie auch durch die schematische sowie perspektivische Teilansicht eines Kanalteilstücks 7 in Fig. 3 mit einer Schnittdarstellung des Eckwinkels 16 in Fig. 3a dargestellt ist. Das Profil 5 umschließt die Schenkel 16a, 16b jeweils eng, und der innere Steg 14 setzt auf der Kanalwand 9 auf. Nur zum besseren Verständnis der Zeichnung ist ein loser Verbund der Bauteile des Flansches 8 - so auch in Fig. 4 - dargestellt. Der zweiteilige Eckwinkel 16 in Fig. 3 und 3a ist handelsüblich. Wenn benachbarte Flansche 8 von zwei miteinander zu verbindenden Kanalteilstücken 7 durch üblicher Verschrauben an den vier Ecken des Kanalteilstücks 7 (vgl. Schraubenlöcher 17 in den Schenkeln 16a, 16b in Fig. 3 und 3a) fest miteinander verbunden werden, werden auch die inneren Abkantungen 15 zwischen den Schenkeln 16a, 16b der Eckwinkel 16 gemeinsam mit den ersten Schenkeln 10 zusammengepreßt und sicher befestigt. In Fig. 2a wird gezeigt, daß das erfindungsgemäße Prinzip auch für andere Querschnittsformen der Profile 5 mit entsprechender Anpassung der Form der Eckwinkel 16a' anzuwenden ist. Die Flansche 8 erhalten auf diese Weise ohne den sonst üblichen Aurfwand die notwendige Stabilität.

Fig. 4 zeigt schematisch im Querschnitt ein geschlossenes Profil 5 eines der Art nach bekannten rahmenartigen Flansches 8 aus Einzelprofilen und Eckwinkel um Aufschieben auf die Enden eines hier nicht dargestellten Kanalteilstücks bzw. auf dessen als Linie dargestellten Kanalwand 9 bis zum Erreichen einer Rastbefestigung des Flansches 8 an der Kanalwand 9, wenn eine nahe und parallel zum Rand des Kanalblechs 9 verlaufende schräge Sicke 18 in eine entsprechend ausgebildete, im unteren Schenkel 19 des Profils 5 verlaufende schräge Rille 18a unter dem Druck des zurückgebogenen inneren Steges 14 einrastet. Diese Rastverbindung durch schräge V-förmige Sieben 18 und Rillen 18a ist für jede Querschnittsform des Profiles 5 zu verwenden und insofern nicht an die Darstellung von Fig. 4 gebunden. Durch Verschrauben der Eckwinkel 16 benachbarter Flansche 8 werden diese fest miteinander verbunden, und dabei wird auch die innere Abkantung 15 - wie bei der Ausführung nach Fig. 2 - fest verklernmt. Der Flansch S hat ein hohes Maß an Stabilität erhalten. Die Querschnittsform des Profils 5 in Fig. 4 weicht von dem geraden Profil 5 von Fig. 2 im unteren Teil durch einen nach außen abgewinkelten Abschnitt 20 des zweiten Schenkels 13 und einen entsprechend breiteren inneren Steg 14 ab, die einen Einlaufspalt für die Kanalwand 9 bilden.

Fig. 5 und 6 zeigen nur bekannte Querschnittsformen von an Kanalwänden 9 angeformten geschlossenen Profilen 5a bzw. 5b mit aufwendiger Befestigung der nach außen abgeminkelten Endabschnitte 21 der Profile 5a, 5b.

## Patentansprüche

1. System für Klimatisierungskanäle aus aneinander gesetzten, im Querschnitt rechteckigen Kanalteilstücken (7) aus Blech, an deren beiden Enden zum Verbinden der Kanalteilstücke (7) jeweils ein rahmenartiger Flansch (8) aus Profilen (5) mit in Öffnungen der Profile (5) einsteckbaren Eckwinkeln (16) angeordnet ist, wobei
das den Eckwinkel (16) umschließende Profil (5) eine innere Abkantung (15) neben und parallel zu einem ersten Schenkel (10) aufweiset,
**dadurch gekennzeichnet, daß**
das Profil (5) aus dem aus der Kanalblechebene (E) abgewinkelten ersten Schenkel (10), einem davon abgewinkelten äußeren Steg (11), einem hiervon in Richtung auf die Kanalwand (9) abgebogenen zweiten Schenkel (13) und einem hiervon zurückgebogenen inneren Steg (14) besteht, von dem die innere Abkantung (15) nach innen abgewinkelt ist.

2. System nach Anspruch 1, **dadurch gekennzeichnet, daß** das Profil (5) jeweils mit freien für die Eckbereiche der Flansche (8) bestimmten Randabschnitten zwischen den Profilabschnitten an beiden Rändern einer Blechbahn (3) vor dem Abkanten der Kanalwände (9) angeformt ist und geteilte Eckwinkel (16) mit Schenkeln (16a, 16b) vorgesehen sind.

3. System nach Anspruch 1 oder 2, **dadurch gekennzeichnet, daß** das Profil (5) als Einzelprofil mit Eckwinkeln zur Bildung der rahmenartigen Flansche (8) zum Aufschieben auf die Enden der Kanalteilstücke (7) einen Einlaufspalt zwischen dem inneren Steg (14) und einem unteren Schenkel (19) aufweist.

4. System nach Anspruch 3, **dadurch gekennzeichnet, daß** die Wände (9) der Kanalteilstücke (7) in Randnähe jeweils eine schräge Sicke (18) zum Einrasten in eine entsprechende schräge Rille (18a) des Profils (5) in dem unteren Schenkel (19) aufweisen, von dem der erste Schenkel (10) des Profils (5) abgewinkelt ist.

## Claims

1. System for air conditioning ducts made of abutting duct sections (7) with a rectangular cross section made of sheet metal, at both ends of which a frame type flange (8) made of profiles (5) with corner angles (16) which can be inserted into openings of the profiles (5) is respectively placed for connecting the duct sections (7), whereby
the profile (5) which encompasses the corner angle (16) has an inner chamfer (15) adjacent and parallel to a first leg (10),
**characterized in that**
the profile (5) consists of the first leg (10) bent off of the duct sheet surface plane (E), an outer web (11) bent off thereof, a second leg (13) bent off thereof in direction of the duct wall (9) and an inner web (14) bent back thereof, web of which the inner chamfer (15) is bent off inwards.

2. System according to claim 1, **characterized in that** the profile (5) is moulded respectively with free edge sections defined for the corner areas of the flanges (8) between the profile sections on both edges of a metal sheet (3) before the bevelling of the duct walls (9) and split corner angles (16) are provided with legs (16a, 16b).

3. System according to claim 1 or 2, **characterized in that** the profile (5) as a single profile with corner angles for forming the frame type flanges (8) has a feeding slit between the inner web (14) and a lower leg (19) for slipping onto the ends of the duct sections (7).

4. System according to claim 3, **characterized in that** the walls (9) of the duct sections (7) have respectively an inclined bead (18) in the vicinity of the edge for engaging into a corresponding inclined groove (18a) of the profile (5) in the lower leg (19) of which the first leg (10) of the profile (5) is bent-off.

## Revendications

1. Système pour relier des voies de climatisation constituées par des tronçons de voie (7) en tôle, mis bout à bout, de section rectangulaire, aux deux extrémités desquels une bride de type cadre (8), constituée par des profils (5) avec des cornières d'angle (16) pouvant être emboîtées dans des ouvertures des profils (5), est respectivement placée pour relier les tronçons de voie (7),
le profil (5) qui entoure la cornière d'angle (16) présentant un chanfrein intérieur (15) près d'un premier montant (10) et parallèle à celui-ci,
**caractérisé en ce que**
le profil (5) est constitué par le premier montant (10) coudé à partir du plan de la tôle de la voie (E), un montant extérieur (11) coudé à partir de celui-ci, un second montant (13) courbé à partir de celui-ci en direction de la paroi de la voie (9) et un dos intérieur (14) recourbé à partir de celui-ci à partir duquel le chanfrein intérieur (15) est coudé vers l'intérieur.

2. Système selon la revendication 1, **caractérisé en ce que** le profil (5) est moulé respectivement avec des portions marginales libres définies pour les zones de coin des brides (8) entre les portions de profil sur les deux bords d'une feuille de tôle (3) avant le chanfreinage des parois de voie (9) et que des cornières d'angle divisées (16) avec des montants (16a, 16b) sont prévues.

3. Système selon la revendication 1 ou 2, **caractérisé en ce que** le profil (5) présente, en tant que profil séparé avec des cornières d'angle, une fente d'entrée entre le dos intérieur (14) et un montant inférieur (19) pour former les brides de type cadre (8) pour enfiler sur les extrémités des tronçons de voie (7).

4. Système selon la revendication 3, **caractérisé en ce que** les parois (9) des tronçons de voie (7) présentent, à proximité du bord, respectivement une moulure inclinée (18) pour s'engrener dans une rainure inclinée correspondante (18a) du profil (5) dans le montant inférieur (19) à partir duquel le premier montant (10) du profil (5) est coudé.
